(19) Europäisches Patentamt
European Patent Office
Office européen des brevets

(11) **EP 2 318 718 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **09781877.7**

(22) Anmeldetag: **14.08.2009**

(51) Int Cl.:
**F04D 27/02** *(2006.01)*  **F02C 9/22** *(2006.01)*

(86) Internationale Anmeldenummer:
**PCT/EP2009/060577**

(87) Internationale Veröffentlichungsnummer:
**WO 2010/020595 (25.02.2010 Gazette 2010/08)**

(54) **GASTURBINE**

GAS TURBINE

TURBINE À GAZ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.08.2008 CH 13322008**

(43) Veröffentlichungstag der Anmeldung:
**11.05.2011 Patentblatt 2011/19**

(73) Patentinhaber: **Ansaldo Energia Switzerland AG
5401 Baden (CH)**

(72) Erfinder:
• **FUCHS, Herbert
5415 Nussbaumen (CH)**
• **NEMET, Anton
5426 Lengnau (CH)**
• **HOFFMANN, Jürgen
5417 Untersiggenthal (CH)**

(74) Vertreter: **Bernotti, Andrea et al
Studio Torta S.p.A.
Via Viotti, 9
10121 Torino (IT)**

(56) Entgegenhaltungen:
EP-A- 1 840 355        US-A- 5 042 245
US-A1- 2003 011 199

## Beschreibung

### TECHNISCHES GEBIET

Die vorliegende Erfindung bezieht sich auf das Gebiet der Gasturbinentechnik. Sie betrifft eine Gasturbine mit schnell regelbaren verstellbaren Verdichterleitschaufeln.

### STAND DER TECHNIK

Gasturbinen, bei denen ein Strom erzeugender Generator von einer Gasturbine angetrieben wird und die erzeugte elektrische Leistung in ein Netz mit vorgegebener Netzfrequenz (z.B. 50 oder 60 Hz) einspeisen, haben üblicherweise eine feste Kopplung zwischen der (mechanischen) Drehzahl der Turbine und der Netzfrequenz. Der Ausgang des Generators ist dabei über eine Netzverbindung frequenzstarr mit dem Netz verbunden, während er von der Turbine entweder direkt (1-Wellenanlage) oder über ein mechanisches Getriebe drehzahlgekoppelt angetrieben wird.

Werden grosse Verbraucher an das Netz zugeschaltet oder fallen Kraftwerke von dem Netz weg, so kann es zu Schwankungen der Netzfrequenz kommen, der die Gasturbine durch die frequenzstarre Kupplung unmittelbar folgen muss. Dies kann zu kritischen Betriebszuständen im Verdichter einer Gasturbine führen.

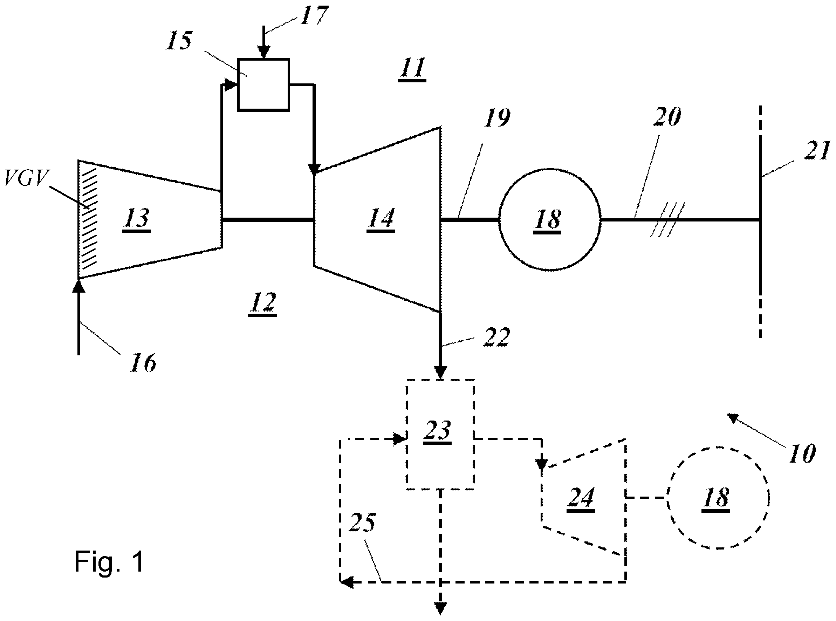

Fig. 1 zeigt in einer stark vereinfachten Darstellung eine Kraftwerksanlage 10 bekannter Art, die mittels einer Gasturbine 12 mit angekoppeltem ersten Generator 18 und einer Dampfturbine 24 mit angekoppeltem zweiten Generator 8 Strom erzeugt und in ein Netz 21 einspeist. Die Gasturbine 12 und der Generator 18 sind durch eine gemeinsame Welle 19 verbunden und bilden einen Wellenstrang 11. Die Gasturbine umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird.

Die aus der Brennkammer 15 austretenden heissen Gase werden in einer nachfolgenden Turbine 14 unter Arbeitsleistung entspannt und treiben so den Verdichter 13 und den angekoppelten ersten Generator 18 an. Das beim Austritt aus der Turbine noch relativ heisse Abgas wird durch einen nachfolgenden Abhitzedampferzeuger 23 geschickt, um in einem separaten Wasser-Dampf-Kreislauf 25 Dampf für den Betrieb einer Dampfturbine 24 zu erzeugen. Kondensator, Speisewasserpumpe und weitere Systeme des Wasser-Dampfkreislaufes 25 sind zur Vereinfachung der Darstellung nicht gezeigt. Eine solche Kombination von Gasturbinen- und Dampfkraftwerk wird als Kombikraftwerk bezeichnet. Die Dampfturbine 24 kann dabei mit dem ersten Generator 18 auf der der Turbine 14 gegenüberliegenden Seite gekoppelt sein; Gasturbine 12, ersten Generator 18 und Dampfturbine 24 bilden dann einen sogenannten "Single Shaft Power Train". Die Dampfturbine 24 kann aber auch, so wie in Fig. 1 gezeigt, einen eigenen zweiten Generator 8 auf einem separaten Wellenstrang antreiben. Für Mehrwellenanlagen sind verschiedene Kombinationen bekannt.

Bei der 1-Wellen-Gasturbine der Fig. 1 steht die Drehzahl der Gasturbine 12 in einem festen Verhältnis zur im Generator 18 erzeugten Frequenz der Wechselspannung, die gleich der Netzfrequenz des Netzes 21 ist. Damit ist auch die mechanische Drehzahl mit der der Verdichter der Gasturbine betrieben wird vorgegeben.

Der Frequenzbereich und damit auch die minimale mechanische Drehzahl, in dem die Gasturbine betreibbar sein muss, wird in der Regel vom Netzbetreiber vorgeschrieben. Weiter wird, abhängig von den lokalen Gegebenheiten, ein ambienter Betriebsbereich definiert. Um im gesamten möglichen Frequenzbereich und ambienten Betriebsbereich sicher operieren zu können, wird der Verdichter der Gasturbine mit einem Abstand zur sogenannten Pumpgrenze ausgelegt und betrieben.

Die Pumpgrenze ist der Zustand, an dem das Druckverhältnis, das von dem Verdichter aufgebaut werden muss für den momentanen Betriebszustand zu gross wird, und es zu einem Strömungsabriss, Rückströmung und Druckstössen im Verdichter kommen kann.

Stabilitätskriterium für den sicheren Betrieb eines Verdichter ist die sogenannte "aerodynamische Drehzahl". Für die jeweilige Stellung der verstellbaren Verdichterleitschaufeln ergibt sich abhängig von der aerodynamischen Drehzahl das maximale Druckverhältnis, das der Verdichter aufbauen kann. Um einen sicheren Betrieb der Gasturbine zu gewährleisten, wird diese mit einem Abstand zur Pumpgrenze, auch Pumpgrenzabstand genannt, betrieben.

Reicht der Abstand zur Pumpgrenze nicht mehr für einen sicheren Betrieb der Gasturbine aus, muss der Verdichter entlastet werden. Dies kann durch eine Reduktion des Verdichterduckverhältnisses oder Schliessen der verstellbaren Verdichtervorleitreihen erreicht werden.

Diese Massnahmen führen zu einer Reduktion der Leistung und sind in einem optimierten Kraftwerksbetrieb so weit wie möglich zu vermeiden. Insbesondere bei einem Unterfrequenzereignis an Tagen mit hoher ambienter Temperatur, in dem die Gasturbinenleistung typischerweise ohne weitere Gegenmassnahmen proportional zur Netzfrequenz abnimmt, würde eine weitere Leistungsreduktion das Netz zusätzlich destabilisieren.

Weiter kann die Gasturbine durch Schutzentlasten, insbesondere durch einen Lastabwurf, vom Netz genommen werden und netzunabhängig drehzahlgeregelt weiter gefahren werden. Da sie dann aber keine Leistung mehr an das Netz abgibt, ist dies für die Netzstabilität die ungünstigste Lösung.

Die Problematik, Gasturbinen mit genügendem Abstand zur Pumpgrenze zu betreiben, ist bekannt. Ein Verfahren zum Betrieb einer Gasturbine, mit dem der Abstand zur Pumpgrenze bei Vollastbetrieb für den gesamten ambienten Betriebsbereich möglichst konstant gehalten wird, ist in der US6226974 beschrieben.

Weiter wird in der US6794766 ein Verfahren zum Betrieb einer Gasturbine vorgeschlagen, in dem im quasistationären Betrieb bei tiefer aerodynamischer Drehzahl die verstellbaren Verdichterleitschaufeln geschlossen werden, um einen ausreichenden Pumpgrenzabstand zu realisieren. Der Pumpgrenzabstand wird dabei so gross gewählt, dass die verstellbaren Verdichterleitschaufeln bei einem Unterfrequenzereignis gegenüber der Nominalposition bei mechanischer Auslegungsdrehzahl geöffnet werden können. Damit kann der drehzahlbedingte Leistungsabfall der Gasturbine zumindest teilweise kompensiert werden und das Netz besser unterstützt werden.

Eine Auslegung und Betrieb mit grossen Pumpgrenzabstand führt bei herkömmlich Gasturbinen im Normalbetrieb, d.h. bei Betrieb mit Nenndrehzahl im ambienten Betriebsfenster, zu einem suboptimalen Verdichterwirkungsgrad.

Ausserdem kann das Leistungspotential der Gasturbine in weiten Betriebsbereichen nicht voll ausgenutzt werden.

## DARSTELLUNG DER ERFINDUNG

Es ist Aufgabe der Erfindung, eine Gasturbine zur Versorgung von Stromnetzen zu schaffen, welche die Nachteile bekannter Gasturbinen vermeidet und bei hohem Wirkungsgrad das Leistungspotential der Gasturbine in einem weiten Betriebsfenster ausnutzt, sowie ein Verfahren zu deren Betrieb anzugeben.

Die Aufgabe wird durch die Gesamtheit der Merkmale des unabhängigen Anspruchs gelöst. Ein wesentlicher Punkt der Erfindung besteht in einer Regelung und einem zugehörigen Verfahren zur Regelung der verstellbaren Verdichterleitschaufeln VGV, die auch bei schweren Unterfrequenzereignissen in Verbindung mit ungünstigen ambienten Bedingungen die verstellbaren Verdichterleitschaufeln so schnell regelt, dass der Einfluss der Netzfrequenzänderungen im erforderlichen Betriebsbereich durch Entlasten des Kompressors kompensiert werden kann. Dafür werden während eines Unterfrequenzereignisses die verstellbaren Verdichterleitschaufeln so schnell geschlossen, dass ein Abstand zur Pumpgrenze des Verdichters erhalten bleibt. Als ambiente Bedingungen sind hier die Eintrittsbedingungen des Verdichters bezeichnet. Diese sind in der Regel gleich den Umgebungsbedingungen des Kraftwerkes. Durch spezielle Massnahmen, wie Kühlung der Ansaugluft zur Leistungssteigerung oder Rezirkulation von Abgas, können diese von den Umgebungsbedingungen abweichen.

Die Regelkette, die entsprechend schnell auszulegen ist, beinhaltet einen Regler oder Rechner, Aktuatoren der verstellbaren Verdichterleitschaufeln, Messaufnehmer der Winkelposition der verstellbaren Verdichterleitschaufeln, eine Netzfrequenz- oder Gasturbinedrehzahlmessung sowie eine Datenübertragung.

Um die Regelung zu vereinfachen kann die aerodynamische Drehzahl

$$n^* = n_{mech} \frac{1}{\sqrt{\kappa \cdot R \cdot T}}$$

in einen Term für die mechanische Drehzahl $n_{mech}$ und einen Term, der die ambienten Randbedingung beschreibt, aufgeteilt werden. Die ambienten Randbedingungen des Verdichters werden mit dem Quotienten aus eins durch die Quadratwurzel des Produkts von Isentropenexponenten $\kappa$, Gaskonstante R und Eintrittstemperatur T beschrieben und in dem ambienten Faktor

$a_F = 1/\sqrt{\kappa \cdot R \cdot T}$ zusammengefasst. Die aerodynamische Drehzahl kann damit vereinfacht als $n^* = n_{mech} a_F$ geschrieben werden.

Die ambienten Bedingungen und damit der ambiente Faktor $a_F$ ändern sich langsam und sind, relativ zu den schnellen dynamischen Vorgängen in einer Gasturbine, quasistationär. Im Gegensatz dazu ändert sich die mechanische Drehzahl $n_{mech}$ bei einem Unterfrequenzereignis schnell.

Abhängig von den ambienten Bedingungen kann die minimal erforderliche mechanische Drehzahl bestimmt werden, bei der ein sicherer Betrieb mit der jeweiligen Position der verstellbaren Verdichterleitschaufeln möglich ist. Zu dieser Drehzahl wird eine Marge für einen schlimmst anzunehmenden Drehzahlabfall während der Reaktionszeit der Regelung der verstellbaren Verdichterleitschaufeln sowie für dynamische Effekte in der Gasturbine addiert und damit eine Grenze des zulässigen Betriebsbereichs bestimmt. Diese wird in dem Regler der Gasturbine gespeichert oder ihm über ein geeignetes Speichermedium zur Verfügung gestellt. Während des Betriebes werden die relevanten ambienten Bedingungen gemessen und der zugehörige Grenzwert bestimmt. Sobald die mechanische Drehzahl unter diesen Grenzwert fällt, werden die verstellbaren Verdichterleitschaufeln schnell geschlossen.

Dynamische Effekte in der Gasturbine sind Verzögerungen in dem Betriebszustand während schneller Transienten der Gasturbine. Diese führen dazu, dass kritische Grössen, wie Verdichteraustrittdruck oder Temperatur von den stationären Werten bei sonst gleichen Randbedingungen abweichen. Beispielsweise führen die Volumen in der Turbine bei Schliessen der verstellbaren Verdichterleitreihen zu einer Verzögerung des Druckabfalls am Verdichteraustritt. Neben dem Volumen von Verdichter, Brennkammer und Turbine sind auch die Volumina der Kühlluftsysteme zu berücksichtigen, die insbesondere wenn Kühlluftkühler angeordnet sind, zu einer Verschiebung des Druckaufbaus im Verdichter führen können.

Der Grenzwert ist in einer beispielhaften Ausführung als mehrdimensionales Feld in Abhängigkeit der Position der verstellbaren Verdichterleitreihen, der Verdichtereintrittstemperatur T, des Isentropenexponenten $\kappa$ und der Gaskonstanten R bestimmt und abgelegt. Praktisch kann das Produkt aus Isentropenexponenten $\kappa$ und Gaskonstanten R der Ansaugluft von luftatmenden Gasturbinen beispielsweise vereinfacht als Funktion der Luftfeuchte bestimmt werden. Alternativ können Änderungen des Isentropenexponents $\kappa$ vernachlässigt werden und die Gaskonstanten R als Funktion der Luftfeuchte bestimmt werden.

In einer weiteren beispielhaften Ausführung ist der Grenzwert vereinfacht als eindimensionale Funktion des ambienten Faktors $a_F$ definiert und abgelegt.

Der zur Bewältigung von Unterfrequenzereignissen vorgesehene Anteil am gesamten Pumpgrenzabstand, der bei Volllastbetrieb von herkömmlichen Gasturbinen für den sicheren Betrieb vorgesehen ist, ist signifikant. Er beträgt mindestens 10%, in der Regel sogar mehr als 30% und bei Vernachlässigung der Margen für Designunsicherheiten und Alterung der Gasturbine sogar 50% oder mehr des gesamten Pumpgrenzabstandes. Mit der vorgeschlagenen schnellen Regelung und dem dazu gehörigen Regelkonzept kann auf diesen Anteil im wesentlichen verzichtet werden und so der Verdichter näher am Wirkungsgradoptimum betrieben werden und das Leistungspotential der Gasturbine besser ausgenutzt werden.

Bei schweren Unterfrequenzereignissen kann die Netzfrequenz mit mehr als 1 Hz/s fallen. Im Extrem ist sogar mit 1.6 Hz/s zu rechnen, wie augrund von Felderfahrung bei schweren Frequenzeinbrüchen beobachtet. Für die Auslegung kann sogar mit 2 Hz/s oder mehr gearbeitet werden.

Die zur Kompensation eines derart schnellen Frequenzeinbruches nötige Schliessgeschwindigkeit der verstellbaren Verdichterleitschaufeln ist von den Charakteristiken des Verdichters abhängig. Die Schliessgeschwindigkeit der verstellbaren Verdichterleitschaufeln wird üblicherweise in Winkel- Grad pro Sekunde angegeben. Für eine Entlastung des Verdichters liegt sie bei typischen Industriegasturbinen bei mindestens 5°/s. Ein sicherer Betrieb kann beispielsweise in den meisten Fällen mit einer Schliessgeschwindigkeit von 10°/s sichergestellt werden. Eine Schliessgeschwindigkeit von bis 20°/s und mehr kann vorteilhaft sein.

Die Regelung wird dabei die verstellbaren Verdichterleitschaufeln nicht bis zur Lehrlaufposition schliessen, sondern nur soweit, wie es zur Realisierung eines sicheren Betriebes bei der minimalen vom Netz geforderten Frequenz nötig ist. Diese sogenannte VGV Unterfrequenzposition hängt von der Gasturbine und den Netzanforderungen ab. Ein Schliessen der ersten verstellbaren Verdichterleitschaufel von beispielsweise 5° gegenüber der Nominalstellung kann ausreichen. Beispielsweise kann aber auch ein Schliessen von etwa 10° erforderlich sein. In Extrem müssen die verstellbaren Verdichterleitschaufeln noch weiter geschlossen werden. Das Verhältnis von Winkeländerungen verschiedener Reihen der verstellbaren Verdichterleitschaufeln ist dabei verdichterspezifisch. Soweit vorhanden, werden die zweite, dritte oder folgende Reihe verstellbarer Verdichterleitschaufeln typischerweise weniger stark gefahren als die erste Reihe.

Für Teillastbetrieb der Gasturbine, bei der die Gasturbine mit einer Position der verstellbaren Verdichterleitschaufeln zwischen Nominalposition und VGV Unterfrequenzposition betrieben wird, sind erfindungsgemäss verschiedene Regelstrategien denkbar. In einer ersten Ausführung wird die Grenze des zulässigen Betriebsbereichs für offene Verdichterleitschaufeln unabhängig von der aktuellen Stellung der verstellbaren Verdichterleitschaufeln angewandt, solange die verstellbaren Verdichterleitschaufeln weiter offen als die VGV Unterfrequenzposition ist. In einer zweiten Ausführung wird die Grenze des zulässigen Betriebsbereichs zusätzlich als Funktion der Position der verstellbaren Verdichterleitschaufeln bestimmt. Dies erlaubt bei Teillast die Grenze, an der auf ein Unterfrequenzereignis reagiert wird, noch weiter zu tiefen mechanischen Drehzahlen zu verschieben. In einer weiteren Ausführung wird die Grenze des zulässigen Betriebsbereichs ausserdem als Funktion des Verdichterenddruckes oder des Verdichterdruckverhältnisses bestimmt.

Die Stellung der verstellbaren Verdichterleitschaufeln muss bei schnellen Transienten nicht notwendigerweise über eine Regelung erfolgen, sondern kann über eine Steuerung realisiert werden. Die normale Regelung wird dafür während der schnellen Transienten ausgesetzt oder das Steuersignal wird zu dem Regelsignal als Offset addiert.

Entsprechend der schnellen Änderungen in der Position der verstellbaren Verdichterleitschaufeln ändert sich der Ansaugmassenstrom des Verdichters schnell. Ohne Korrektur des Brennstoffmassenstroms würde dies zu einer starken Erhöhung des stöchiometrischen Verhältnisses in der Brennkammer und einem steilen Anstieg der Turbineneintrittstemperatur führen. Dieser Anstieg ist im Rahmen normaler Schwankungen zu halten, damit die Gasturbine nicht über Schutzlimite automatisch abgestellt wird, und, um schwere Schäden an der Brennkammer und Turbine zu vermeiden.

Die Turbineneintrittstemperatur wird typischerweise nicht direkt gemessen, sondern indirekt über eine Kombination von Messgrössen bestimmt. Eine der wichtigsten Messgrössen ist dabei die relativ langsame Messung der Turbinenaustrittstemperatur. Infolge der langsamen Turbinenaustrittstemperaturmessung ist die Bestimmung der Turbineneintrittstemperatur bei schnellen Transienten für die Regelung nicht optimal. Um einen verbesserten transienten Betrieb zu realisieren, kann eine Vorsteuerung der Brennstoffregelung vorgesehen werden. Mit dieser kann der Brennstoffmassenstrom beispielsweise proportional zum Ansaugmassenstrom reduziert werden.

## KURZE ERLÄUTERUNG DER FIGUREN

Die Erfindung soll nachfolgend anhand von Ausführungsbeispielen im Zusammenhang mit den Zeichnungen näher erläutert werden. Es zeigen

Fig. 1  ein stark vereinfachtes Schaltbild eines Kombikraftwerkes mit einer Gasturbine und einem nachgeschalteten Wasser-Dampfkreislauf nach dem Stand der Technik;

Fig. 2  eine vereinfachte Darstellung der Betriebsgrenzen in Abhängigkeit von den ambienten Bedingungen und der mechanischen Drehzahl,

Fig. 3  den zeitlichen Verlauf des schnellen VGV Schliessens, und

Fig. 4  schematisch den zeitlichen Verlauf der Leistungsabgabe für verschiedene Betriebsverfahren und der Drehzahl bei einem Unterfrequenzereignis.

## WEGE ZUR AUSFÜHRUNG DER ERFINDUNG

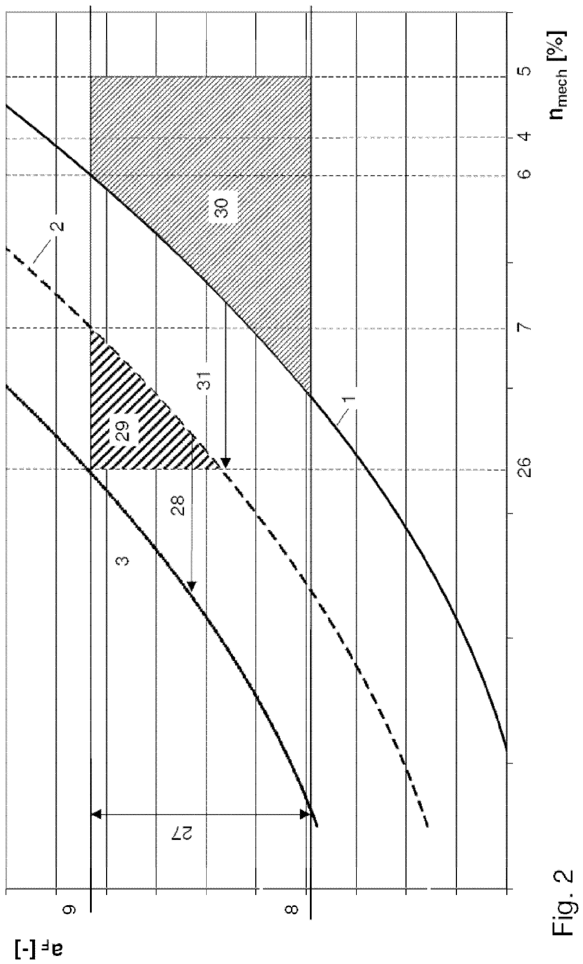

In Fig. 2 sind mögliche Betriebsfenster dargestellt. Insbesondere sind die kritischen Grenzen der mechanischen Drehzahl in Abhängigkeit der ambienten Bedingungen, die vereinfachend in dem ambienten Faktor $a_F$ zusammengefasst sind, gezeigt. Der geforderte zulässige ambiente Betriebsbereich 27 wird durch den minimalen ambienten Faktor 8 und den maximalen ambienten Faktor 9 begrenzt.

Die mechanische Drehzahl kann, ausgehend von der Designdrehzahl 4 je nach Betriebskonzept in einem Betriebsbereich variieren. Nach oben ist der mechanische Drehzahlbereich durch die maximale mechanische Drehzahl 5 begrenzt. Die Drehzahl wird typischerweise durch mechanische Limite und nicht durch aerodynamische Limite nach oben begrenzt. Möglichkeiten zur Ausdehnung des Drehzahlbereichs in Richtung zu höheren Drehzahlen ist nicht Gegenstand der Erfindung und wird an dieser Stelle, wie eine Ausdehnung des ambienten Betriebsbereichs, nicht weiter diskutiert.

Gegenstand der Diskussion ist eine Erweiterung des Betriebsbereichs in Richtung zu tieferen mechanischen Drehzahlen $n_{mech}$. Die herkömmliche, als statische Grenze 1 bezeichnete Begrenzung des Volllast- Betriebsbereichs, die Sicherheit gegen ein schweres Unterfrequenzereignis ohne Gegenmassnahmen gewährleistet, führt in dem Beispiel zu einem relativ kleinen, als Basis-Betriebsfenster 30 bezeichneten, Betriebsfenster. Durch die erfindungsgemässe schnelle Regelung mit dem entsprechenden Verfahren kann das Drehzahllimit zu deutlich tieferen mechanischen Drehzahlen verschoben werden und eine Erweiterung des Volllast- Betriebsfensters 31 wird realisiert. Als Volllast ist dabei ein Betrieb mit geöffneten verstellbaren Verdichterleitschaufeln VGV und nominaler Turbineneintrittstemperatur bezeichnet.

Bei dem herkömmlichen Verfahren ist die statische Grenze des Volllast-Betriebsbereichs 1 ein hartes Limit unterhalb dessen kein Volllast- Betrieb möglich ist. Entweder wird die Gasturbine bei Erreichen des Limits schutzentlastet oder sie musst vor erreichen des Limits im quasi stationären Betrieb entlastet werden, um den Betriebsbereich rechtzeitig vor einem Unterfrequenzereignis zu erweitern. Entsprechend kann ein uneingeschränkter Betrieb nur für kleine Einbrüche in der Netzfrequenz gewährleistet werden. Die mechanische Drehzahl $n_{mech}$ kann nur bis zu einem ersten Drehzahllimit 6 im gesamten ambienten Bereich reduziert werden.

Im Gegensatz dazu erlaubt die neue, als dynamische Grenze 2 bezeichnete Begrenzung des Volllast-Betriebsbereichs eine deutliche Erweiterung des Betriebsbereichs und stellt kein hartes Limit dar. Erfindungsgemäss kann die Gasturbine 12 bis zu dieser dynamischen Grenze 2 mit Volllast betrieben werden. Ein Überschreiten der dynamischen Grenze 2 führt nicht zu einem Schutzentlasten, sondern zu einem schnellen Schliessen der verstellbaren Verdichterleitschaufeln VGV und damit zu einer zusätzlichen Erweiterung des Betriebsbereichs durch teilgeschlossene Verdichterleitschaufeln 28.

Mit der dynamischen Regelung kann ein uneingeschränkter Betrieb für deutlich grössere Einbrüche in der Netzfrequenz gewährleistet werden. Die mechanische Drehzahl $n_{mech}$ kann bis zu einem zweiten Drehzahllimit 7 im gesamten ambienten Bereich reduziert werden.

Im Rahmen des ambienten Betriebsbereiches 27 und der unteren Begrenzungen des Betriebsbereichs durch die minimale mechanische Drehzahl 26 führt dies zu einem zusätzlichen Betriebsfenster für teilgeschlossene verstellbare Verdichterleitschaufeln 29.

Ausgehend von dem Basis- Betriebsfenster 30 kann somit durch die Erweiterung des Volllast- Betriebsfensters 31 und dem Betriebfenster für teilgeschlossene verstellbare Verdichterleitschaufeln 29 ein Lastbetrieb im gesamten erforderlichen Betriebsbereich sichergestellt werden. Einschränkungen in der Leistungsfähigkeit der Gasturbine 12 werden in dem Beispiel nur in dem kleinen Betriebfenster für teilgeschlossene verstellbare Verdichterleitschaufeln 29 in Kauf genommen.

Herkömmlich könnte ein derart grosses Betriebsfenster nur durch eine spürbare Designänderung im Verdichter oder der Gasturbine realisiert werden, die eine signifikante Einbusse im Wirkungsgrad und der Leistung oder eine Verteuerung des Designs wegen grösserer Verdichterdimensionen zur Folge hätte.

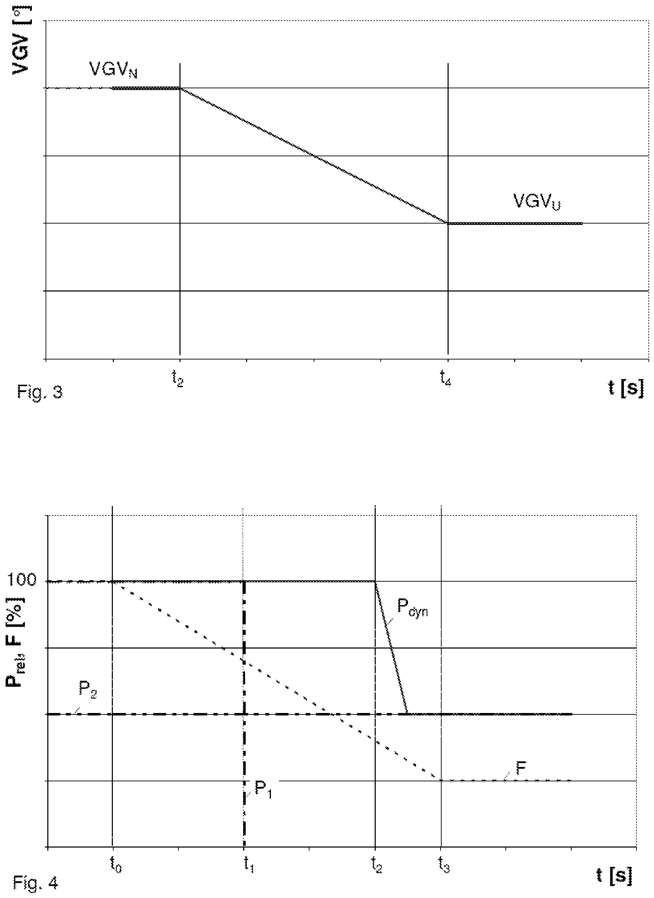

Der zeitliche Verlauf der schnellen VGV Unterfrequenzregelung ist an dem Beispiel eines linearen Schliessens in Fig. 3 dargestellt. Sobald die mechanische Drehzahl $n_{mech}$ unter die dynamische Grenze des Betriebsbereichs bei offener VGV 2 fällt, werden die verstellbaren Verdichterleitschaufeln ausgehend von der VGV Nominalposition $VGV_N$ von dem Regler zugefahren. Dieser Zeitpunkt wird als Start der schnellen VGV Unterfrequenzregelung $t_2$ bezeichnet. Sie werden beispielsweise mit konstanter Winkelgeschwindigkeit bis zur VGV Unterfrequenzposition $VGV_U$ geschlossen, die sie zu dem Schliesszeitpunkt der VGV Unterfrequenzregelung $t_4$ erreichen.

Die resultierenden Vorteile gegenüber herkömmlichen Gasturbinen mit herkömmlichen Betriebsverfahren sind in Fig. 4 schematisch anhand des zeitlichen Verlaufs der mit der Volllast normierten relativen Leistung $P_{rel}$ und der Netzfrequenz F für ein beispielhaftes Unterfrequenzereignis gezeigt. Ausgehend von der mechanischen Auslegungsdrehzahl $n_{mech}$=100% fällt ab einem Zeitpunkt $t_0$ die Netzfrequenz F bis sie zu einem Zeitpunkt $t_3$ ein Minimum erreicht.

In einem ersten Beispiel für herkömmliche Gasturbinen 12 wird die Gasturbine 12 bis zu einem Zeitpunkt $t_1$ mit Volllast betrieben und gibt eine Leistung $P_1$ an das Netz ab. Am Zeitpunkt $t_1$ fällt die mechanische Drehzahl $n_{mech}$ als Folge der reduzierten Netzfrequenz F unter das Drehzahllimit 1, das den Volllast-Betriebsbereich abhängig von ambienten Bedingungen beschränkt. Nach Unterschreiten der statischen Grenze des Vollast- Betriebsbereichs 1 wird die Gasturbine 12 schutzentlastet und kann keine Leistung $P_1$ mehr an das Netz abgeben.

In einem zweiten Beispiel für herkömmliche Gasturbinen 12 wird die Gasturbine 12 abhängig von den ambienten Bedingungen schon im stationären Betrieb bei Auslegungsdrehzahl abgelastet, um genügend Abstand zur Pumpgrenze zu gewährleisten. Die Gasturbine 12 muss so im geforderten Betriebsbereich nicht mehr Schutzentlastet werden, hat aber schon im Normalbetrieb bei Auslegungsdrehzahl eine reduzierte Leistung $P_2$.

Das erfindungsgemässe Verfahren erlaubt es, die Gasturbine 12 bis zum Erreichen der dynamischen Grenze des Vollast- Betriebsbereichs 2 ohne Reduktion der Leistung $P_{dyn}$ zu betreiben. Erst wenn zu dem Zeitpunkt "start der schnellen Unterfrequenzregelung" $t_2$ die mechanische Drehzahl $n_{mech}$ als Folge der reduzierten Netzfrequenz F unter die, in Abhängigkeit von den ambienten Bedingungen bestimmte, dynamischen Grenze des Vollast- Betriebsbereichs 2 fällt, wird die Gasturbine durch schnelles Schliessen der verstellbaren Verdichterleitschaufeln entlastet. Sie kann aber auch dann weiter Leistung $P_{dyn}$ an das Netz abgeben.

Bei allen Beispielen ist der direkte Einfluss der mechanischen Drehzahl auf die Leistung der Gasturbine nicht betrachtet: es wird angenommen, dass dieser durch geeignete Massnahmen zur Leistungserhöhung, wie einer Erhöhung der Heissgastemperatur oder Wassereinspritzung in den Verdichter oder die Brennkammer ausgeglichen wird. Es ist lediglich der Einfluss der Stellung der verstellbaren Vorleitreihen VGV sowie eines Schutzentlastens schematisch dargestellt.

Die möglichen Ausführungen der Erfindung sind nicht auf die hier dargestellten Beispiele beschränkt. Anhand der Beispiele eröffnen sich dem Fachmann eine Vielzahl von Möglichkeiten, Gasturbinen mit äquivalenten Regelungen und Verfahren zu realisieren. Beispielsweise ist denkbar, das schnelle Schliessen der verstellbaren Verdichterleitschaufeln 29 unabhängig von den ambienten Bedingungen unterhalb einer mechanischen Drehzahl $n_{mech}$ bzw. Netzfrequenz F durchzuführen. Beispielsweise könnte das schnelle Schliessen der verstellbaren Verdichterleitschaufeln 29 immer unterhalb eines festen Grenzwertes durchgeführt werden. Es könnte z.B. unterhalb von 98% der nominalen Netzfrequenz durchgeführt werden. Damit wäre die Regelung der Gasturbine vereinfacht nur als Funktion der Netzfrequenz und unabhängig von den ambienten Bedingungen realisierbar.

Weiter ist die Anwendung nicht auf luftatmende Gasturbinen beschränkt, sondern ist auch bei geschlossenen oder teilgeschlossenen Kreisprozessen mit beliebigen Gasengemischen, z.B. für Gasturbinen mit Abgasrezirkulation, möglich.

BEZUGSZEICHENLISTE

| | |
|---|---|
| 1 | statische Grenze des Volllast- Betriebsbereichs |
| 2 | dynamische Grenze des Volllast- Betriebsbereichs |
| 3 | Grenze bei Unterfrequenz VGV |
| 4 | mechanische Designdrehzahl |
| 5 | maximale mechanische Drehzahl |
| 6 | erstes Drehzahllimit |
| 7 | zweites Drehzahllimit |
| 8 | minimaler ambienter Faktor $a_F$ |
| 9 | maximaler ambienter Faktor $a_F$ |
| 10 | Kraftwerksanlage |
| 11 | Wellenstrang |
| 12 | Gasturbine |
| 13 | Verdichter |
| 14 | Turbine |
| 15 | Brennkammer |
| 16 | Lufteinlass |
| 17 | Brennstoffzufuhr |
| 18 | Generator |
| 19 | Welle |
| 20 | Netzverbindung (frequenzgekoppelt) |
| 21 | Netz |
| 22 | Abgasauslass |
| 23 | Abhitzedampferzeuger |
| 24 | Dampfturbine |
| 25 | Wasser-Dampf-Kreislauf |
| 26 | minimale mechanische Drehzahl |
| 27 | ambienter Betriebsbereich |
| 28 | Erweiterung des Betriebsbereichs durch teil- |

geschlossene verstellbare Verdichterleit-schaufeln

29   Betriebfenster für teilgeschlossene verstellbare Verdichterleitschaufeln

30   Basis- Betriebsfenster

31   Erweiterung des Volllast- Betriebsfensters

$a_F$   ambienter Faktor

$n_{mech}$   mechanische Drehzahl

VGV   verstellbare Verdichterleitschaufeln

$P_1$, $P_2$   Leistungsverlauf bei herkömmlichen Regelungen

$P_{dyn}$   Leistungsverlauf bei Regelungen mit dynamischer Grenze des Vollast- Betriebsbereichs

$P_{rel}$   relative Leistung

R   Gaskonstante der Ansaugluft

T   Verdichtereintrittstemperatur

$t_0$   Zeitpunkt: Beginn des Unterfrequenzereignisses

$t_1$   Zeitpunkt: Unterschreiten der statischen Grenze des Volllast-Betriebsbereichs 1

$t_2$   Zeitpunkt: Unterschreiten der dynamischen Grenze des Volllast- Betriebsbereichs 2 Start der schnellen VGV Unterfrequenzregelung

$t_3$   Zeitpunkt: Erreichen der minimalen Netzfrequenz

$t_4$   Schliesszeitpunkt der VGV Unterfrequenzregelung

$VGV_N$   VGV Nominalposition

$VGV_U$   VGV Unterfrequenzposition

$\kappa$   Isentropenexponent der Ansaugluft

## Patentansprüche

1.  Gasturbine (12) mit einem von der Gasturbine (12) direkt angetriebenen, Wechselstrom mit einer Betriebsfrequenz erzeugenden Generator (18), der frequenzgekoppelt mit einem Netz (21) mit gegebener Netzfrequenz (F) in Verbindung steht mit einer Regelkette umfassend einen Regler oder Rechner, Aktuatoren einer verstellbaren Verdichterleitschaufel (VGV), Messwertaufnehmer der Winkelposition der verstellbaren Verdichterleitschaufel (VGV), eine Netzfrequenzmessung sowie eine Datenübertragung, wobei die Regelung der verstellbaren Verdichterleitschaufeln (VGV) in Abhängigkeit von einem Unterfrequenzereignis die verstellbaren Verdichterleitschaufeln (VGV) mit einer genügenden Geschwindigkeit schliessen kann, so dass ein Abstand zur Pumpgrenze des Verdichters (13) bei einem Unterfrequenzereignis des Netzes (21) erhalten bleibt.

2.  Gasturbine nach Anspruch 1, **dadurch gekennzeichnet, dass** die Regelgeschwindigkeit der verstellbaren Verdichterleitschaufeln (VGV) mehr als 5°/s beträgt.

3.  Gasturbine nach Anspruch 1, **dadurch gekenn-**

**zeichnet, dass** die Regelgeschwindigkeit der verstellbaren Verdichterleitschaufeln (VGV) mehr als 10°/s beträgt.

4.  Gasturbine nach einem der Ansprüche 1 bis 3, **dadurch gekennzeichnet, dass** die Aktuatoren der verstellbaren Verdichterleitschaufeln (VGV) schneller als 10°/s fahrbar sind.

5.  Gasturbine nach einem der Ansprüche 1 bis 3, **dadurch gekennzeichnet, dass** der Regelkreis der verstellbaren Verdichterleitschaufeln (VGV) für eine Regelung mit mehr als 10°/s Winkelgeschwindigkeit Aktuatoren, Messaufnehmer der Winkelposition, verstellbaren Verdichterleitschaufeln (VGV) und Regler aufweist.

## Claims

1.  Gas turbine (12) with a generator (18) which is driven directly by the gas turbine, produces alternating current at an operating frequency and is connected with frequency coupling to a network (21) with a given network frequency (F), and with a control chain comprising a regulator or computer, actuators of an adjustable compressor guide vane (VGV), measurement transducers for the angular position of the adjustable compressor guide vane (VGV), a network frequency measurement and a data transmission, wherein the regulation system of the adjustable compressor guide vanes (VGV), depending on an under-frequency event, can close the adjustable compressor guide vanes (VGV) with sufficient speed to retain a margin from the surge limit of the compressor (13) on an under-frequency event of the network (21).

2.  Gas turbine according to claim 1, **characterised in that** the control speed of the adjustable compressor guide vanes (VGV) is more than 5°/s.

3.  Gas turbine according to claim 1, **characterised in that** the control speed of the adjustable compressor guide vanes (VGV) is more than 10°/s.

4.  Gas turbine according to any of claims 1 to 3, **characterised in that** the actuators of the adjustable compressor guide vanes (VGV) can travel faster than 10°/s.

5.  Gas turbine according to any of claims 1 to 3, **characterised in that** the control loop of the adjustable compressor guide vanes (VGV) comprises actuators, measurement transducers for the angular position, adjustable compressor guide vanes (VGV) and regulators for regulation with an angular speed of more than 10°/s.

**Revendications**

1. Turbine à gaz (12) avec un générateur (18) entraîné directement par la turbine à gaz (12), produisant un courant alternatif avec une fréquence de service, qui est couplé en fréquence avec un réseau (21) avec une fréquence de réseau (F) donnée, avec une chaîne de régulation comprenant

   un régulateur ou calculateur, des actionneurs d'une aube directrice de compresseur (VGV) réglable, des enregistreurs de valeurs de mesure de la position angulaire de l'aube directrice de compresseur (VGV) réglable, une mesure de fréquence de réseau ainsi qu'une transmission de données, la régulation des aubes directrices de compresseur (VGV) réglables pouvant fermer, en fonction d'un événement de sous-fréquence, les aubes directrices de compresseur (VGV) réglables avec une vitesse suffisante pour maintenir une distance par rapport à la limite de pompage du compresseur (13) lors d'un événement de sous-fréquence du réseau (21).

2. Turbine à gaz selon la revendication 1, **caractérisée en ce que** la vitesse de régulation des aubes directrices de compresseur (VGV) réglables est supérieure à 5°/s.

3. Turbine à gaz selon la revendication 1, **caractérisée en ce que** la vitesse de régulation des aubes directrices de compresseur (VGV) réglables est supérieure à 10°/s.

4. Turbine à gaz selon l'une des revendications 1 à 3, **caractérisée en ce que** les actionneurs des aubes directrices de compresseur (VGV) réglables peuvent être déplacés avec une vitesse supérieure à 10°/s.

5. Turbine à gaz selon l'une des revendications 1 à 3, **caractérisée en ce que** le circuit de régulation des aubes directrices de compresseur (VGV) réglables comprend, pour une régulation avec une vitesse angulaire supérieure à 10°/s, des actionneurs, des enregistreurs de mesure de la position angulaire, des aubes directrices de compresseur (VGV) réglables et des régulateurs.

Fig. 1

EP 2 318 718 B1

Fig. 2

Fig. 3

Fig. 4

EP 2 318 718 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6226974 B

- US 6794766 B